# EUROPEAN PATENT SPECIFICATION

(11) **EP 4 008 853 B1**
(45) Date of publication and mention of the grant of the patent: **01.01.2025**
(21) Application number: 21206974.4
(22) Date of filing: 08.11.2021
(51) Int. Cl.: E04F 21/18, F16B 7/14, E04G 25/04

(54) **A SUPPORT DEVICE**
STÜTZVORRICHTUNG
DISPOSITIF DE SUPPORT

(30) Priority: 10.02.2021 EP 21156283; 03.12.2020 EP 20211608
(43) Date of publication of application: 08.06.2022
(73) Proprietor: Illinois Tool Works, Inc., Glenview, Illinois 60025 (US)
(72) Inventor: SIMONIN, Jean-Luc, Glenview, 60025 (US)
(74) Representative: HGF

(56) References cited:
- WO-A1-90/10770
- US-A- 4 560 031
- US-A1- 2005 274 572
- US-A1- 2018 106 054

## Description

The present invention relates to a support device for holding a drywall rail against a ceiling to allow an installer to fasten the drywall rail to the ceiling.

### BACKGROUND

A drywall system may include drywall rails that are fastened to the ceiling and floor, and drywall panels that are held in place between the drywall rails to form the drywall. The drywall may be a partition wall. Vertical rails may also extend between the ceiling and floor drywall rails. The drywall rails are typically attached to the ceiling and floor by fasteners, for example using anchors and screws, or nails. During this operation, the drywall rail must remain fixed without moving. This step is usually made by the installer or many installers with their hands which is time consuming for everybody. US4560031 discloses a height adjustable apparatus for supporting goods for a person at a desired height.

### BRIEF SUMMARY OF THE DISCLOSURE

The present invention provides a support device adapted to hold a drywall rail against a ceiling for fastening the drywall rail to the ceiling, the support device comprising:
a first engagement portion sized to be inserted into the drywall rail,
a pole slidably attached to the first engagement portion and extending to contact an opposing surface opposite the ceiling, and
a biasing member arranged to act between the first engagement portion and the pole to urge the first engagement portion and the drywall rail against the ceiling during use.

The support device can extend between the floor and ceiling to hold the drywall rail against the ceiling, allowing an installer to fasten the drywall rail to the ceiling without having to hold the drywall rail.

In examples, the engagement portion may comprise a rail, and the pole may be slidably attached to the rail of the engagement portion.

In examples, the pole may comprise a carriage fixed to the extendible pole and slidably attached to the rail, and the biasing member may act between the carriage and the engagement portion. In examples, the carriage may include a fixing ring, for example a clamping ring, that fixes the carriage to the pole.

In examples, the engagement portion may comprise a seat and the biasing member may act between the seat and a part of the pole, for example the carriage. In examples, the seat may comprise an opening to permit movement of an end part of the pole through the seat.

In examples, the biasing member may comprise a compression spring or a gas actuator.

In examples, the engagement portion may further comprise a magnet.

In examples, the pole comprises an extendible pole. In examples, the extendible pole may comprise a telescopic pole having at least two telescopic parts and a clamp arranged to clamp the telescopic parts to each other.

In examples, the support device may further comprise a second engagement portion disposed at an end of the pole opposite to the first engagement portion. The second engagement portion may be configured to engage the opposing surface opposite the ceiling.

In examples, the pole may comprise a level, for example a spirit level.

### BRIEF DESCRIPTION OF THE DRAWINGS

Embodiments of the invention are further described hereinafter with reference to the accompanying drawings, in which:
FIG. 1 shows a support device holding a drywall rail against a ceiling for installing the drywall rail on the ceiling;
FIG. 2 shows an engagement portion of the support device;
FIG. 3 shows the engagement portion of the support device and a part of the drywall rail;
FIG. 4 shows the support device and drywall rail in contact with the ceiling during use of the support device;
FIG. 5 shows compression of a compression spring of the support device during use of the support device;
FIG. 6 shows an installer positioning the support device;
FIG. 7 shows an installer fastening the drywall rail to the ceiling while using the support device;
FIG. 8 shows the components of the support device disassembled; and
FIGS. 9A and 9B show an example support device that includes a second engagement portion arranged to engage the floor during use.
FIG. 10 illustrates another embodiment of the support device
FIG.11 illustrates the different steps followed by an operator during the installation of the support device of FIG. 10
FIGS. 12 to 14 illustrates the different parts of the support device of FIG.10

### DETAILED DESCRIPTION

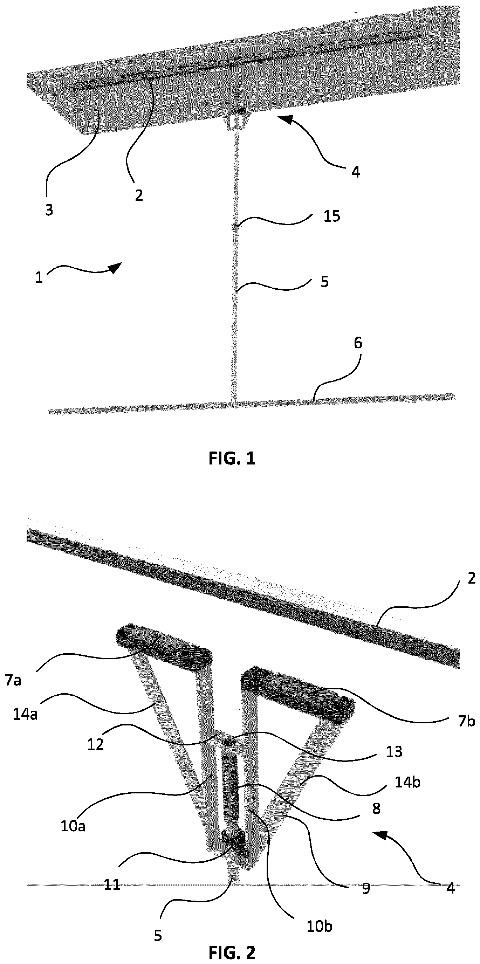

As shown in FIG. 1, the support device 1 extends between a floor 6 and a ceiling 3 to hold a drywall rail 2 against the ceiling 3. The support device 1 can be used to hold the drywall rail 2 against the ceiling 2 so that an installer can fasten the drywall rail 2 to the ceiling 3 without having to hold the drywall rail 2 in place themselves.

In some examples, a further drywall rail may be attached to the floor 6 and aligned with the drywall rail 2 on the ceiling, and the support device 1 can engage the floor drywall rail.

As illustrated, the support device 1 includes an extendible pole 5 and an engagement portion 4 (also called first engagement portion 4). The extendible pole 5 may be a telescopic pole with a telescopic part 51 sliding into a main body of the pole 5, and a clamp 15 adapted to secure the two parts 5 and 51 to each other at the desired length.

As illustrated in FIG. 2 , a biasing member is arranged to act between the extendible pole 5 and the engagement portion 4. In the illustrated example the biasing member comprises a compression spring 8.

As illustrated, the engagement portion 4 comprises a first rail 10a and a second rail 10b, and the extendible pole 5 has a carriage 11 that slidably engages the second rail 10b. The carriage 11 may be clamped onto the extendible pole 5. Accordingly, the extendible pole 5 is slidably mounted to the engagement portion 4 via the carriage 11 and second rail 10b.

In examples the carriage may sliding engage the first rail 10a and/or the second rail 10b.

The engagement portion 4 also includes a seat 12, and the compression spring 8 is disposed between the carriage 11 on the extendible pole 5 and the seat 12 of the engagement portion 4 to act between the extendible pole 5 and the engagement portion 4. In particular, an end portion of the extendible pole 5 is positioned within the compression spring 8. Accordingly, pushing the extendible pole 5 upwards during use to press the engagement portion 4 onto the ceiling (3, see FIG. 1c) causes the compression spring 8 to be compressed and a biasing force exerted on the drywall rail (2, see FIG. 1).

As shown in FIG. 2, the seat 12 may include a hole 13 to accommodate movement of the end of the extendible pole 5 past the seat 12 when the compression spring 8 is compressed. In some examples, the end of the extendible pole 5 is approximately aligned with the seat 12 when the compression spring 8 is not compressed such that the position of the compression spring 8 is maintained.

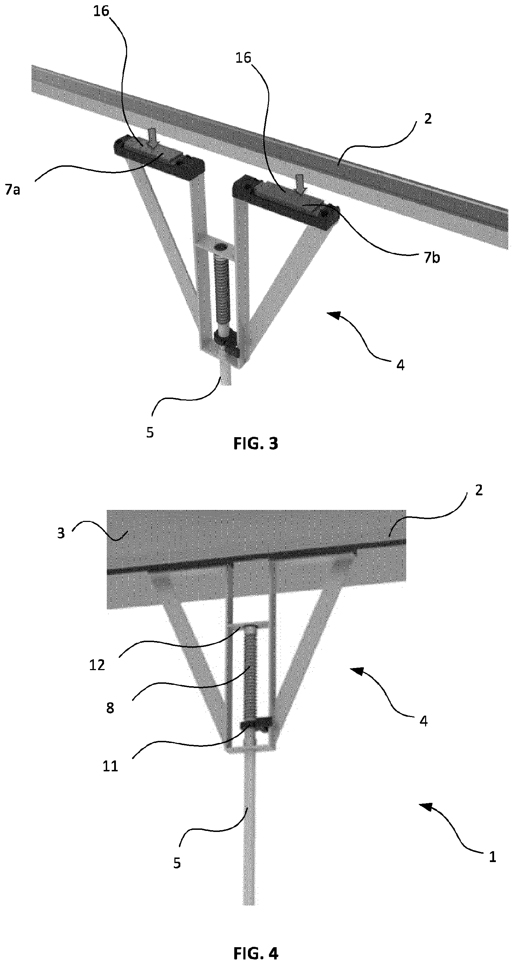

The engagement portion 4 also include engaging parts 7a, 7b. In examples, as shown in FIG. 3, the engaging parts 7a, 7b may include magnets 16 adapted to attract the drywall rail 2.

The engaging parts 7a, 7b may be sized so as to fit within the drywall rail 2. For example, the drywall rail 2 may comprise one or more flanges extending from a web (e.g., an L profile, a C-profile, or an H-profile), and the engaging parts 7a, 7b may be adapted to fit between the flange(s) and engage the web. Accordingly, the drywall rail 2 is stably supported and the flange(s) and engaging parts 7a, 7b may ensure alignment of the drywall rail 2 to the engaging parts 7a, 7b.

As shown in FIG. 2, the engaging parts 7a, 7b are attached to ends of the first and second rails 10a, 10b. Additionally, diagonal struts 14a, 14b may attach the engaging parts 7a, 7b to the other ends of the first and second rails 10a, 10b. According, the first and second rails 10a, 10b, engaging parts 7a, 7b, and diagonal struts 14a, 14b may form a generally A-frame arrangement. As shown, the seat 12 may be formed by a member extending between the first and second rails 10a, 10b.

FIG. 4 illustrates an initial step of using the support device 1, in which the support device 1 is engaged with a drywall rail 2 that is positioned against the ceiling 3, although not pressed against the ceiling 3. As shown, the compression spring 8 is not compressed.

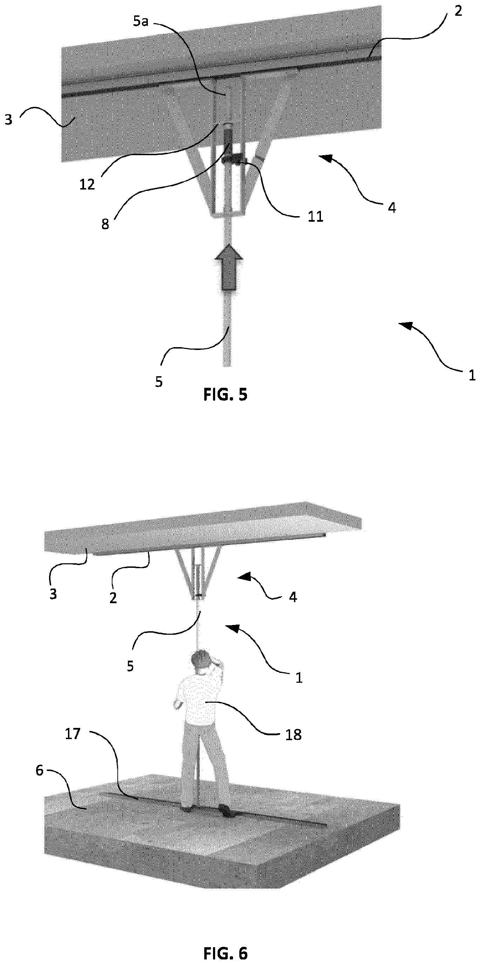

FIG. 5 shows the support device 1 during use to press the drywall rail 2 against the ceiling 3. As shown, the extendible pole 5 has been pushed upwards, compressing the compression spring 8 between the carriage 11 and seat 12, and moving an end part 5a of the extendible pole 5 past the seat 11 (through the hole 13 shown in FIG. 2). In this position, the compression spring 8 acts to urge the engagement portion 4 and extendible pole 5 apart, effectively pushing the engagement portion 4 upwards against the extendible pole 4 to press the drywall rail 2 against the ceiling 3 and hold it in place.

To use the support device 1 the installer attaches the engagement portion 4 to the drywall rail 2 as shown in FIG. 3, positions the drywall rail 2 against the ceiling 3 as shown in FIG. 4, pushes the extendible pole 5 upwards as shown in FIG. 5, extends the pole to the floor (6, see FIG. 1) and locks the extendible pole 5 to length using the clamp (15, see FIG. 1). Accordingly, the support device 1, in particular the compression spring 8, acts to urge the drywall rail 2 against the ceiling 3 and hold it in place without an installer needing to hold the support device 1 or the drywall rail 2.

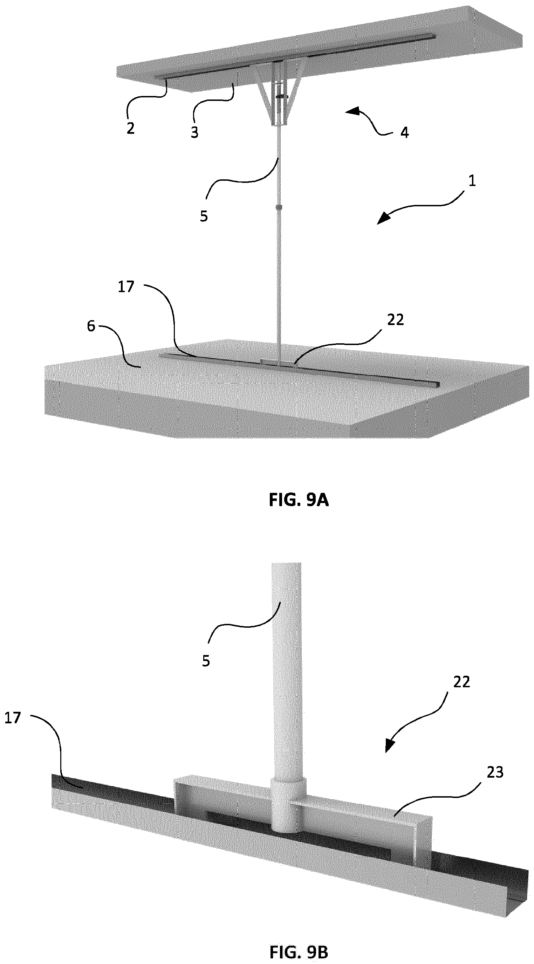

As shown in FIG. 6, the support device 1 may be used between a floor drywall rail 17 on the floor 6 and the ceiling 3. The floor drywall rail 17 and drywall rail 2 may be aligned and parallel. The extendible pole 5, in particular an end of the extendible pole 5, may be shaped to fit into the floor drywall rail 17 and retrain the orientation of the support device 1 so that the engagement portion 4 holds the drywall rail 2 parallel to the floor drywall rail 17. In particular, as illustrated in FIGS. 9A and 9B, a second engagement portion 22 may be provided at an opposite end of the extendible pole to the first engagement portion 4. The second engagement portion 22 is arranged to engage the floor 6 or the floor rail 17. The second engagement portion 22 comprises an elongate portion 23 extending perpendicularly to the extendible pole 5 and parallel and aligned with the engagement portion 4 at the opposite end of the extendible pole 5. Accordingly, the second engagement portion 22 can fit within a floor rail 17, or engage the floor 6, and hold the extendible pole 5 substantially perpendicular to the floor. This ensures that the drywall rail 2 is parallel with the floor drywall rail 17. An installer 18 may use a level to ensure that the extendible pole 5 is substantially vertical, so that the drywall rail 2 is aligned with the floor drywall rail 17. The level may be attached to, or embedded in, the extendible pole 5. In examples, the level may be a spirit level or electronic level.

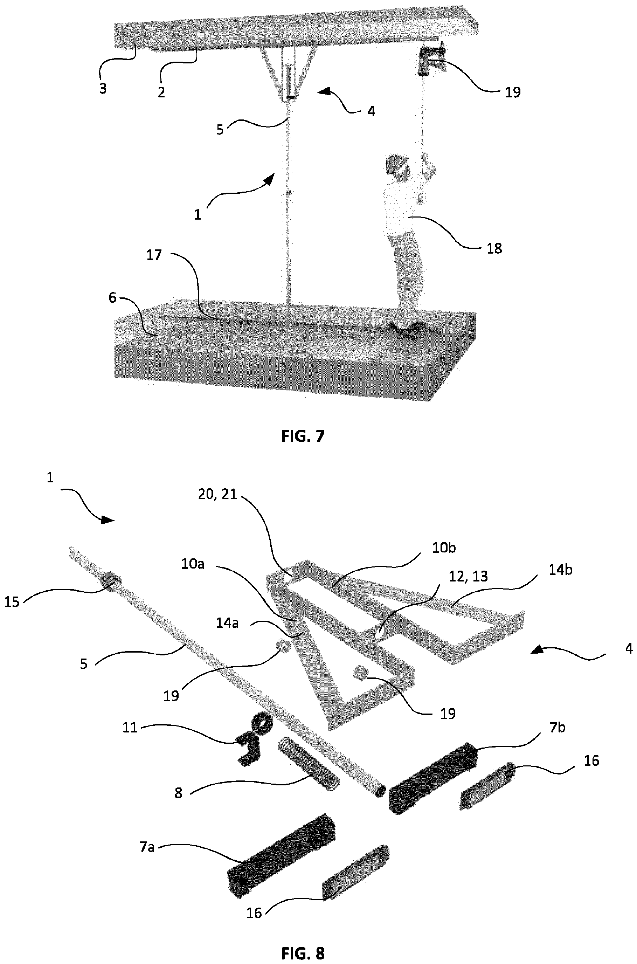

As shown in FIG. 7, the support device 1 holds the drywall rail 2 in position against the ceiling 3, allowing the installer 18 to move freely and fasten the drywall rail 2 to the ceiling 3. In the example of FIG. 7 the installer 18 is using an extended nail gun 19 to nail the drywall rail 2 to the ceiling, but it will be appreciated that the installer 18 may alternatively use a drill, screw, bolt, anchor, ladder, raised platform or other equipment and fasteners to fasten the drywall rail 2 to the ceiling 3 while the drywall rail 2 is held in place by the support device 1.

Once the drywall rail 2 has been fastened to the ceiling 3 the support device 1 can be removed. The support device 1 can be removed by unclamping the clamp 15 on the extendible pole 5. Alternatively, the support device 1 can be removed by pushing the extendible pole 5 upwards to further compress the compression spring 8 and allow the end of the extendible pole 5 to move away from the floor 6. Advantageously, this maintains the fixed length of the extendible pole 5, so the support device 1 is already at the correct length for the next drywall rail 2 to be installed. The installer 18 can push the support device 1 into place for the next drywall rail 2 by compressing the compression spring 8, without having to adjust the length of the extendible pole 5.

Accordingly, in some examples the extendible pole 5 may have alternatively be a pole of fixed length, and the support device 1 may be configured to be used on a range of ceiling heights. The relative movement of the pole 5 and the engagement portion 4 provided by the compression spring 8 permits the support device 1 to be used on ceilings having a range of heights.

FIG. 8 illustrates the components of the support device 1 in disassembled form. As shown, the support device 1 comprises an extendible pole 5 with a clamp 15 for clamping parts of the telescopic arm in position to a defined length. The support device 1 also includes an engagement portion 4 that has a frame formed of first and second rails 10a, 10b, engaging parts 7a, 7b, and diagonal struts 14a, 14b. Magnets 16 are provided on the engaging parts 7a, 7b. Seat 12 extends between the first and second rails 10a, 10b and has a hole 13. As illustrated, linear bushings 19 may be provided for hole 13 in seat 12 and hole 20 in part 21 that extends between the first and second rails 10a, 10b. The linear bushings 19 permit smooth movement of the extendible pole 5 through the holes 13, 20 during use.

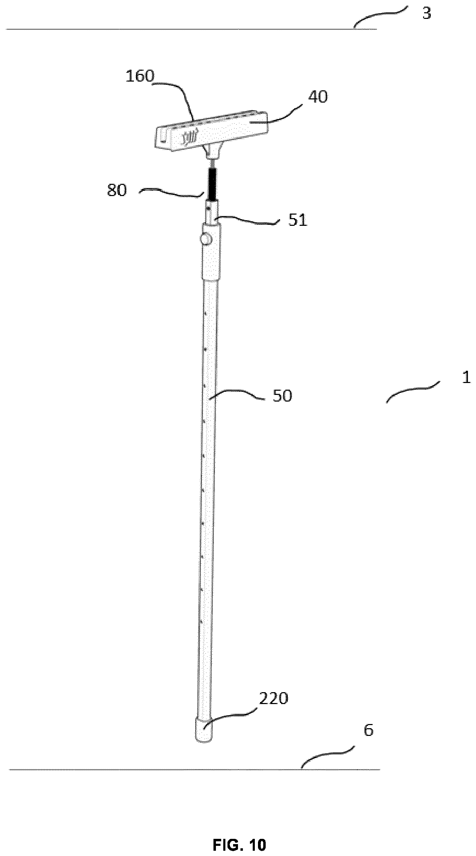

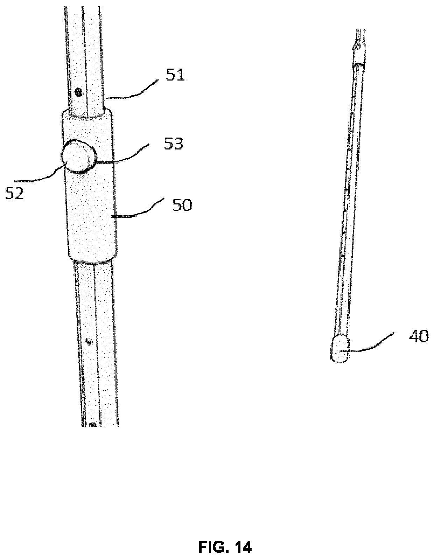

In another embodiment described in relation to figure 10, a support device 1 like previously described in relation to figures 1 to 9B comprises of a biasing member 80 like a gas actuator, this biasing member 80 allowing to press a first engagement portion 40 against a drywall rail 2. This biasing member slid into a pole 50 which acts like the pole 5 previously described. More precisely, the gas actuator slides onto a telescopic part 51 of the pole. To ensure the blocking of the telescopic part 51 on the main body pole 50, a locking 52 (see figure 14) can be, for example, a spring nut on the telescopic part 51. This locking 52 is adapted to be inserted into a hole 53 of a plurality of holes placed along the pole 50 and allows to extend the length of the pole 50 thanks to the telescopic part 51.

The biasing member 80 is locked in rotation by any means known in the art, as for the telescopic part 51 of the pole 50. This allows to the operator to easily and precisely position the drywall cell on the ceiling during the step of positioning

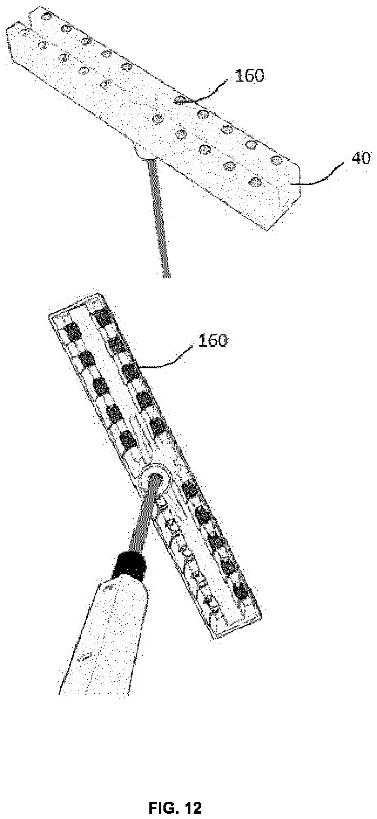

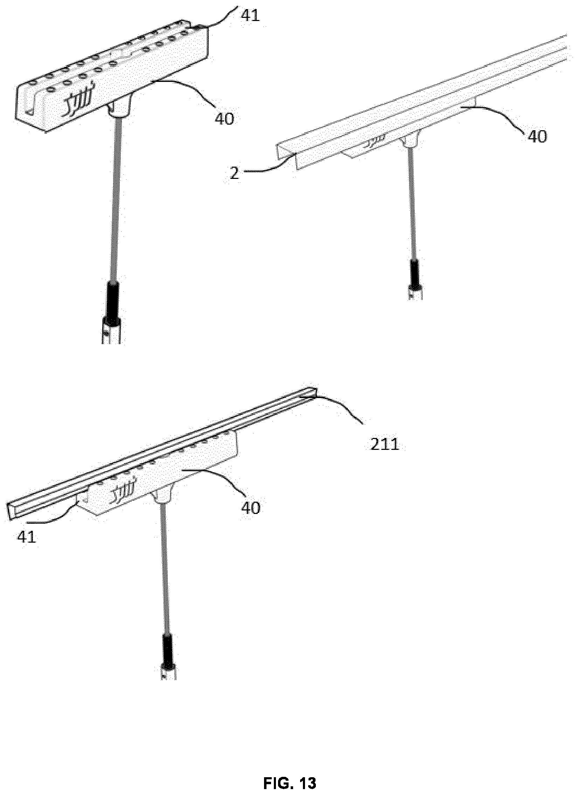

The first engagement portion 40 may include a plurality of magnets 160 (figures 12 and 13), wherein said magnets are in contact with the drywall rail 2 when the fist engagement portion 40 is engaged into the drywall rail 2. Theses magnets 160 can be removable from the first engagement portion if needed (see figure 12). These magnets are inserted (or clipped in) into holes (not shown) of the first engagement portion 40 (made in plastic for example)

In figure 13, one can see that the first engagement portion 40 can be inserted inside the drywall rail 2 or put it in contact with the drywall rail 2, for example by putting a flange 211 of the drywall rail 2 into a groove 41 of the first engagement portion. Thus, the shape of the first engagement portion 40 can be compatible with a plurality of shape of the drywall rail 2. On figure 13, one can see the plurality of magnets 160 at the top of the first engagement portion 40.

For example the gas actuator strength is about 150 daN.

In this embodiment of figure 10, a second engagement portion 220 may be provided at an opposite end of the extendible pole 50 to the first engagement portion 40. The second engagement portion 220 is arranged to engage the floor 6 or the floor rail 17. The second engagement portion 220 is for example a bumper made in rubber. Accordingly, the second engagement portion 220 engage the floor 6, and hold the extendible pole 50 substantially perpendicular to the floor 6.

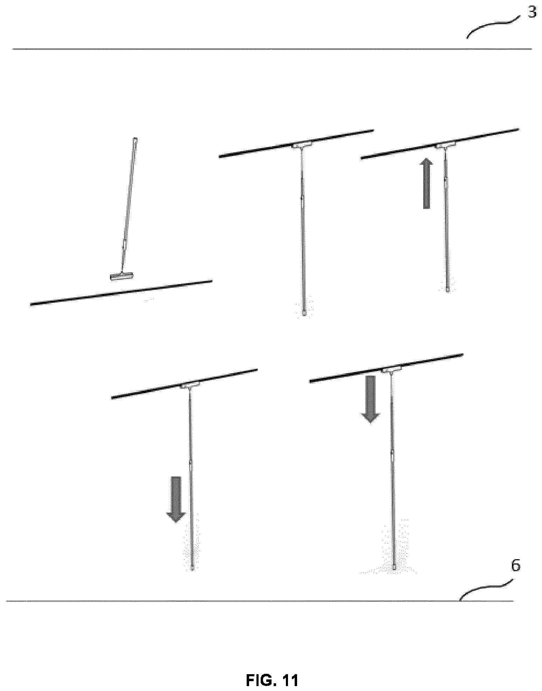

The embodiment of figure 10 is described in more details on figure 11 which illustrates the main 5 steps to engage the first engagement portion into a drywall rail 2 In a step 1, the operator puts the first engagement portion 40 in contact with (into or on to) the drywall rail 2, the drywall rail being positioned on the floor 6. Then the operator applies the drywall rail 2 against the ceiling 3. In a step 3, the operator compresses the actuator. Then in a step 4 the operator extends the pole thanks to the telescopic part 51 and secure the telescopic part 51 and the main body of the pole 50 thanks to the locking 52. In a step 5, the actuator pushes the pole 50 against the floor to secure the drywall rail 2 against the ceiling 3

## Claims

1. A support device (1) adapted to hold a drywall rail (2) against a ceiling (3) for fastening the drywall rail (2) to the ceiling (3), the support device comprising:
a first engagement portion (4; 40) sized to be inserted into the drywall rail (2),
a pole (5; 50) slidably attached to the first engagement portion (4; 40) and extending to contact an opposing surface opposite the ceiling, and
a biasing member (8; 80) arranged to act between the first engagement portion (4) and the pole to urge the first engagement portion (4) and the drywall rail against the ceiling during use.

2. The support device of claim 1, wherein the first engagement portion (4) comprises a rail (10a, 10b), and wherein the pole is slidably attached to the rail of the first engagement portion (4)

3. The support device of claim 2, wherein the pole comprises a carriage (11) fixed to the pole (5) and slidably attached to the rail (10a, 10b), and wherein the biasing member acts between the carriage and a seat (12) of the first engagement portion (4), said seat (12) being a fixed part of the first engagement portion (4)

4. The support device of any preceding claim, wherein the biasing member comprises a compression spring.

5. The support device of claim 1, wherein the biasing member is a gas actuator

6. The support device of any preceding claim, wherein the first engagement portion (4; 40) further comprises at least one magnet (16; 160)

7. The support device of any preceding claims, further comprising a second engagement portion (22; 220) disposed at an end of the pole (5; 50) opposite to the first engagement portion (4; 40), the second engagement portion (22; 220) being configured to engage the opposing surface opposite the ceiling.

8. The support device of any preceding claims, wherein the pole (5) comprises a level, for example a spirit level.

9. The support device of any preceding claims, wherein the pole (5; 50) comprises a telescopic part (51) and a clamp (15; 52) arranged to clamp the telescopic part to the pole (5;50)

10. The support device according to claim 7, wherein the first engagement portion (4) and the second engagement portion (22) are arranged each at an end of the pole (5;50) when assembled.

## Patentansprüche

1. Stützvorrichtung (1), die zum Halten einer Trockenbauschiene (2) gegen eine Decke (3) zum Befestigen der Trockenbauschiene (2) an der Decke (3) ausgebildet ist, wobei die Stützvorrichtung aufweist:
einen ersten Eingriffsabschnitt (4; 40), der so bemessen ist, dass er in die Trockenbauschiene (2) eingesetzt werden kann,
eine Stange (5; 50), die verschiebbar an dem ersten Eingriffsabschnitt (4; 40) befestigt ist und sich derart erstreckt, dass sie eine gegenüberliegende Fläche gegenüber der Decke berührt, und
ein Vorspannelement (8; 80), das derart angeordnet ist, dass es zwischen dem ersten Eingriffsabschnitt (4) und der Stange wirkt, um den ersten Eingriffsabschnitt (4) und die Trockenbauschiene während des Gebrauchs gegen die Decke zu drücken.

2. Stützvorrichtung nach Anspruch 1, wobei der erste Eingriffsabschnitt (4) eine Schiene (10a, 10b) aufweist, und wobei die Stange verschiebbar an der Schiene des ersten Eingriffsabschnitts (4) befestigt ist

3. Stützvorrichtung nach Anspruch 2, wobei die Stange einen Schlitten (11) aufweist, der an der Stange (5) befestigt und verschiebbar an der Schiene (10a, 10b) angebracht ist, und wobei das Vorspannelement zwischen dem Schlitten und einer Befestigungsfläche (12) des ersten Eingriffsabschnitts (4) wirkt, wobei die Befestigungsfläche (12) ein fester Teil des ersten Eingriffsabschnitts (4) ist

4. Stützvorrichtung nach einem der vorhergehenden Ansprüche, wobei das Vorspannelement eine Druckfeder aufweist.

5. Stützvorrichtung nach Anspruch 1, wobei das Vorspannelement ein Gasstellglied ist

6. Stützvorrichtung nach einem der vorhergehenden Ansprüche, wobei der erste Eingriffsabschnitt (4; 40) ferner zumindest einen Magneten (16; 160) aufweist

7. Stützvorrichtung nach einem der vorhergehenden Ansprüche, die ferner einen zweiten Eingriffsabschnitt (22; 220) aufweist, der an einem dem ersten Eingriffsabschnitt (4; 40) gegenüberliegenden Ende der Stange (5; 50) angeordnet ist, wobei der zweite Eingriffsabschnitt (22; 220) derart ausgelegt ist, dass er mit der gegenüberliegenden Oberfläche gegenüber der Decke in Eingriff kommt.

8. Stützvorrichtung nach einem der vorhergehenden Ansprüche, wobei die Stange (5) eine Nivelliervorrichtung, beispielsweise eine Wasserwaage, aufweist.

9. Stützvorrichtung nach einem der vorhergehenden Ansprüche, wobei die Stange (5; 50) ein Teleskopteil (51) und eine Klemme (15; 52) aufweist, die angeordnet ist, um das Teleskopteil an die Stange (5; 50) zu klemmen

10. Stützvorrichtung nach Anspruch 7, wobei der erste Eingriffsabschnitt (4) und der zweite Eingriffsabschnitt (22) jeweils an einem Ende der Stange (5; 50) angeordnet sind, wenn sie zusammengebaut sind.

## Revendications

1. Dispositif de support (1) adapté pour maintenir un rail de cloison sèche (2) contre un plafond (3) pour la fixation du rail de cloison sèche (2) au plafond (3), le dispositif de support comprenant :
une première partie d'engagement (4 ; 40) dimensionnée pour être insérée dans le rail de cloison sèche (2),
un poteau (5 ; 50) attaché de manière coulissante à la première partie d'engagement (4 ; 40) et s'étendant pour entrer en contact avec une surface opposée à l'opposé du plafond, et
un élément de sollicitation (8 ; 80) agencé pour agir entre la première partie d'engagement (4) et le poteau pour pousser la première partie d'engagement (4) et le rail de cloison sèche contre le plafond durant l'utilisation.

2. Dispositif de support selon la revendication 1, dans lequel la première partie d'engagement (4) comprend un rail (10a, 10b), et dans lequel le poteau est attaché de manière coulissante au rail de la première partie d'engagement (4)

3. Dispositif de support selon la revendication 2, dans lequel le poteau comprend un chariot (11) fixé au poteau (5) et attaché de manière coulissante au rail (10a, 10b), et dans lequel l'élément de sollicitation agit entre le chariot et un siège (12) de la première partie d'engagement (4), ledit siège (12) étant une partie fixe de la première partie d'engagement (4)

4. Dispositif de support selon l'une quelconque des revendications précédentes, dans lequel l'élément de sollicitation comprend un ressort de compression.

5. Dispositif de support selon la revendication 1, dans lequel l'élément de sollicitation est un actionneur à gaz

6. Dispositif de support selon l'une quelconque des revendications précédentes, dans lequel la première partie d'engagement (4 ; 40) comprend en outre au moins un aimant (16 ; 160)

7. Dispositif de support selon l'une quelconque des revendications précédentes, comprenant en outre une seconde partie d'engagement (22 ; 220) disposée à une extrémité du poteau (5 ; 50) opposée à la première partie d'engagement (4 ; 40), la seconde partie d'engagement (22 ; 220) étant configurée pour être en prise avec la surface opposée à l'opposé du plafond.

8. Dispositif de support selon l'une quelconque des revendications précédentes, dans lequel le poteau (5) comprend un niveau, par exemple un niveau à bulle.

9. Dispositif de support selon l'une quelconque des revendications précédentes, dans lequel le poteau (5 ; 50) comprend une partie télescopique (51) et une pince (15 ; 52) agencée pour serrer la partie télescopique sur le poteau (5 ; 50)

10. Dispositif de support selon la revendication 7, dans lequel la première partie d'engagement (4) et la seconde partie d'engagement (22) sont agencées chacune à une extrémité du poteau (5 ; 50) lorsqu'elles sont assemblées.
